# EUROPEAN PATENT SPECIFICATION

(11) **EP 4 260 153 B1**
(45) Date of publication and mention of the grant of the patent: **16.07.2025**
(21) Application number: 21827243.3
(22) Date of filing: 07.12.2021
(51) Int. Cl.: G05D 1/00

(54) **IMPROVED OPERATION FOR A ROBOTIC WORK TOOL**
VERBESSERTER BETRIEB FÜR EIN ROBOTISCHES ARBEITSWERKZEUG
FONCTIONNEMENT AMÉLIORÉ POUR OUTIL DE TRAVAIL ROBOTISÉ

(30) Priority: 11.12.2020 SE 2051440
(43) Date of publication of application: 18.10.2023
(73) Proprietor: HUSQVARNA AB, 561 82 Huskvarna (SE)
(72) Inventor: TENGBLAD, Adam, 561 92 Huskvarna (SE); JONNARTH, Arvi, 553 30 Jönköping (SE); JONSSON, Herman, 561 46 Huskvarna (SE); SAXÉN, Adam, 554 66 Jönköping (SE); MALM, Jakob, 556 26 Jönköping (SE); CALÅS, Göran, 571 78 Forserum (SE); JOSEFSSON, Elias, 554 39 Jönköping (SE); AHLM, Victor, 128 43 Bagarmossen (SE); STRAHL, Maria, 561 35 Huskvarna (SE)
(86) International application number: PCT/SE2021/051212
(87) International publication number: WO 2022/124966

(56) References cited:
- US-A1- 2018 361 585
- US-A1- 2019 391 597

## Description

### TECHNICAL FIELD

This application relates to robotic work tools and in particular to a system and a method for providing an improved control signal sensing for a robotic work tool, such as a lawnmower.

### BACKGROUND

Automated or robotic power tools such as robotic lawnmowers are becoming increasingly more popular. In a typical deployment a work area, such as a garden, the the robotic lawnmower is set to operate inside the work area. However, as more and more tasks become available for automation, while such tasks are performed by a dedicated robot, and while the areas and number of tasks increase, so does the need for an improved control of a robotic work tool cooperating with other robotic work tools.

The patent document published as US2019391597A1 discloses methods, systems, and computer programs stored on computer storage devices, for coordinating movements of robots are disclosed. One of the methods includes, for each robot in a group of robots, identifying a set of tasks assigned to the robot and generating a plurality of candidate motion plans. The method further includes, for each candidate motion plan: (i) generating a 3D model that represents a volume of space through which the robot would move in executing the sequence of motions represented by the candidate motion plan, and (ii) determining a score for the candidate motion plan. The method further includes determining conflicts between candidate motion plans of different robots, selecting a motion plan from the candidate motion plans based on the score for the selected motion plan and the conflicts, and providing the selected motion plans for execution by the group of robots.

### SUMMARY

It is therefore an object of the teachings of this application to provide a robotic work tool system comprising a server, a user device and one or more robotic work tools, the server comprising a controller, the controller being configured to: define an extent of a work area; define features of the work area; receive at least one user requirement from the user device; define requirements based on the extent of the work area, the features of the work area and the user requirement; select one or more of the one or more robotic work tools based on capabilities of the robotic work tools by matching the requirements to the capabilities of the robotic work tools; generate operating instructions for the selected robotic work tools; and to transmit the operating instructions to the selected robotic work tools.

In one embodiment more than one robotic work tool is selected.

In one embodiment the controller is further configured to provide a path planning for the selected robotic work tools.

In one embodiment the controller is further configured to receive data relating to the work area from the selected robotic work tools and to update the path panning according to the received data relating to the work area.

In one embodiment the controller is further configured to receive anonymous data based on data from an obscured source; process the data; and to transmit anonymous instructions for the obscured source.

In one embodiment the controller is further configured to receive an indication of a property retrieve a representation of the indicated property; generate a map of the indicated property based on the representation of the indicated property; and to generate the operating instructions for the selected robotic work tools based on the map of the indicated property.

In one embodiment the controller is further configured to determine a sensitivity for debris of an area in said work area and to generate the operating instructions for the selected robotic work tools based on the sensitivity for debris of the area.

In one embodiment the requirement indicates a quality of work, and wherein the controller is further configured to generate the operating instructions by generating a queue of service requirements.

In one embodiment the controller is further configured to determine that a service is to be halted; determine at least one service requirement of at least one service to be continued; determine at least one resource of the robotic work tool; match the at least one service requirement to the at least one resource, and select the service to be continued based on the matching as per the appended laims.

In one embodiment the user device comprises a user interface and the server and wherein the server receives the at least one user requirement from the user device internally via the user interface.

In one embodiment the robotic work tool is a gardening or horticultural robotic work tool suitable for outdoor work in uneven, often dirt or debris-filled environments.

In one embodiment the robotic work tool is a robotic lawnmower.

It is also an object of the teachings of this application to provide a method for use in a robotic work tool system comprising a server, a user device and one or more robotic work tools, the method comprising: defining an extent of a work area; defining features of the work area; receiving at least one user requirement from the user device; defining requirements based on the extent of the work area, the features of the work area and the user requirement; selecting one or more of the one or more robotic work tools based on capabilities of the robotic work tools by matching the requirements to the capabilities of the robotic work tools; generating operating instructions for the selected robotic work tools; and to transmitting the operating instructions to the selected robotic work tools as per the appended claims.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic work tool being a robotic lawnmower according to an example embodiment of the teachings herein;
Figure 2 shows a schematic view of a robotic work tool system according to an example embodiment of the teachings herein;
Figure 3 shows a schematic view of the robotic work tool system according to an example embodiment of the teachings herein indicating communication paths;
Figure 4A shows a schematic view of a robotic work tool system according to an example embodiment of the teachings herein and Figure 4B shows a corresponding flowchart for a method according to the example embodiment of the teachings herein;
Figure 5A shows a schematic view of a robotic work tool system according to an example embodiment of the teachings herein and Figure 5B shows a corresponding flowchart for a method according to the example embodiment of the teachings herein;
Figure 6A shows a schematic view of a robotic work tool system according to an example embodiment of the teachings herein and Figure 6B shows a corresponding flowchart for a method according to the example embodiment of the teachings herein;
Figure 7A shows a schematic view of a robotic work tool system according to an example embodiment of the teachings herein and Figure 7B shows a corresponding flowchart for a method according to the example embodiment of the teachings herein; and
Figure 8A shows a schematic view of a robotic work tool system according to an example embodiment of the teachings herein and Figure 8B shows a corresponding flowchart for a method according to the example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools where lift detection is used and where the robotic work tool is susceptible to dust, dirt or other debris.

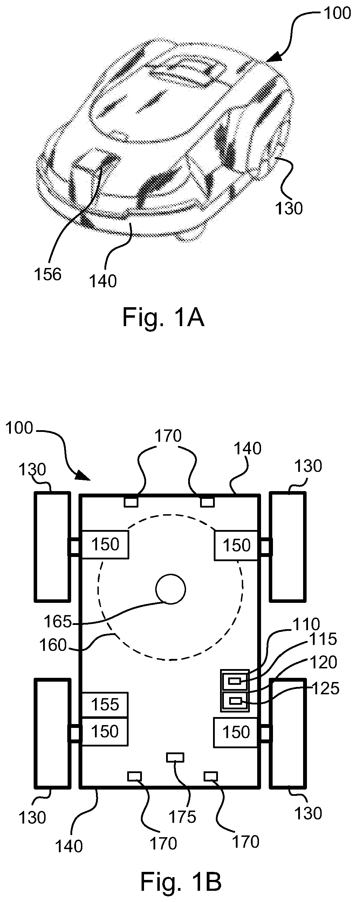

Figure 1A shows a perspective view of a robotic work tool 100, here exemplified by a robotic lawnmower 100. However, it should be noted that a robotic lawnmower is but one example of a robotic work tool adapted according to the teachings herein. Other examples are robotic watering tools, robotic milling tools, robotic hedge trimmer tools, robotic (grass) trimmer tools, and robotic leaf (or other debris) collecting tools. Other examples include, but are not limited to robotic (golf) ball collectors, robotic construction tools. These are all examples of gardening or horticultural robotic work tools, which robotic work tools are suitable for outdoor work in uneven, often dirt or debris-filled environments. The teachings may also be applied to indoor robotic work tools, such as vacuum cleaners.

The robotic lawnmower 100 has a body 140 and a plurality of wheels 130 (only one side is shown), usually three or four wheels 130, however other numbers and arrangements are possible. The robotic work tool 100 may be a multi-chassis type or a mono-chassis type (as in figure 1A). A multi-chassis type comprises more than one main body parts that are movable with respect to one another. A mono-chassis type comprises only one main body part.

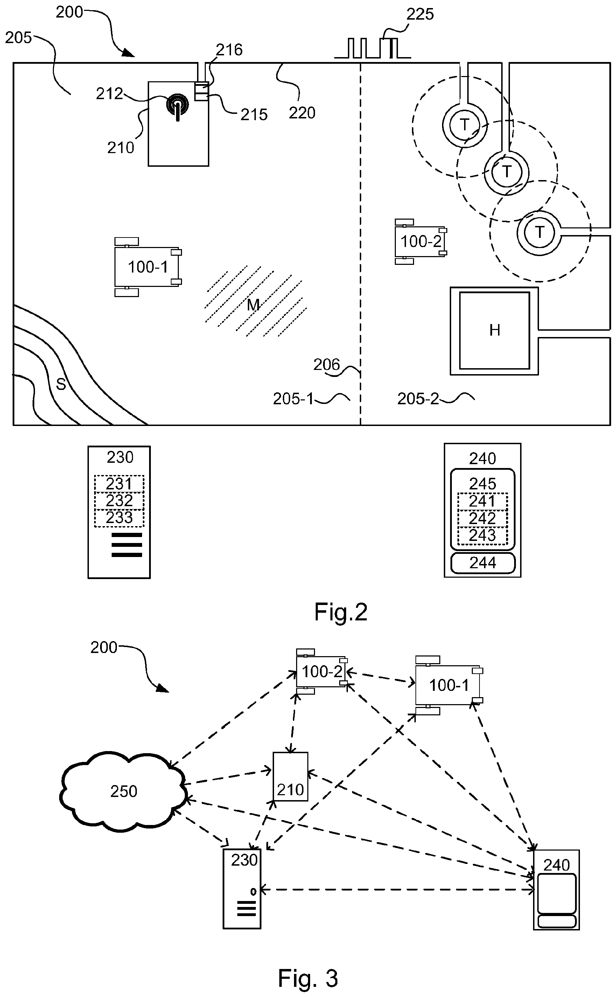

The robotic lawnmower 100 may comprise charging skids for contacting contact plates 156 when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic work tool 100, also exemplified here by a robotic lawnmower 100 as in figure 1A. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a respective electric motor. This allows for driving the wheels 130 independently of one another which, for example, enables steep turning and rotating around a geometrical center for the robotic lawnmower 100. It should be noted though that not all wheels need be connected to each a motor, but the robotic lawnmower 100 may be arranged to be navigated in different manners, for example by sharing one or several motors 150. In an embodiment where motors are shared, a gearing system may be used for providing the power to the respective wheels and for rotating the wheels in different directions. In some embodiments, one or several wheels may be uncontrolled and thus simply react to the movement of the robotic lawnmower 100. In such an embodiment, the uncontrolled wheel may be arranged to swivel around an axis to allow for steeper turning.

In some embodiments some or all of the wheels may be replaced or substituted by other means of propulsion such as continuous track or caterpillar thread-based propulsion systems.

The robotic lawnmower 100 also comprises a grass cutting device 160, such as a rotating blade 160 driven by a cutter motor 165. The grass cutting device being an example of a work tool 160 for a robotic work tool 100.

The robotic lawnmower 100 also has (at least) one battery 155 for providing power to the motor(s) 150 and/or the cutter motor 165.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

In one embodiment, the memory 120 is arranged to store a (virtual) map 125 of a work area (referenced 205 in figure 2). In such an embodiment, the robotic lawnmower 100 is alternatively or additionally arranged to navigate according to the map 125. The map 125 may be arranged to show features (such as gradients, slopes or other factors affecting navigation in the work area, referenced S, M in figure 2), obstacles (referenced T, H in figure 2), and/or sub areas (referenced 205-1, 205-2 in figure 2) of the work area (referenced 205 in figure 2). The map may also be arranged to include the location of other robotic work tools currently operating or being in the work area.

The robotic lawnmower 100 may further be arranged with a wireless communication interface 115 for communicating with other devices, such as a server, a personal computer or smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. As discussed in the above, the robotic work tool 100 may also (alternatively or additionally) be arranged to communicate with the charging station (or rather a controller of the charging station) by sending and/or receiving electrical signals through the charging plates when docked in the charging station. Furthermore, the robotic work tool 100 may also (alternatively or additionally) be arranged to communicate with the charging station (or rather a controller of the charging station) by receiving magnetic signals through magnetic sensors (170) as will be discussed below.

For enabling the robotic lawnmower 100 to navigate with reference to a boundary wire emitting a magnetic field caused by a control signal transmitted through the boundary wire, the robotic lawnmower 100 is further configured to have at least one magnetic field sensor 170 arranged to detect the magnetic field (not shown) and for detecting the boundary wire and/or for receiving (and possibly also sending) information to/from a signal generator (will be discussed with reference to figure 2). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. This enables the controller 110 to determine whether the robotic lawnmower 100 is close to or crossing the boundary wire, or inside or outside an area enclosed by the boundary wire.

As indicated above, the robotic lawnmower 100 may also be arranged to receive information embedded in the control signal, or transmitted alongside the control signal.

In one embodiment, the robotic lawnmower 100 may further comprise at least one navigation sensor, such as a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device. The navigation sensor 190 may alternatively or additionally be an RTK (Real-Time Kinetik) sensor 190.

In one embodiment, the navigation sensor 190 may comprise deduced reckoning sensors, such as inertial movement units or odometer sensors.

In embodiments, where the robotic lawnmower 100 is arranged with a navigation sensor, the magnetic sensors 170 are optional.

Figure 2 shows a schematic view of a robotic work tool system 200 in one embodiment. The schematic view is not to scale. The robotic work tool system 200 comprises one or more robotic work tools 100 as discussed above with reference to figures 1A and 1B. As with figures 1A and 1B, the robotic work tool is exemplified by a robotic lawnmower, whereby the robotic work tool system may be a robotic lawnmower system or a system comprising a combinations of robotic work tools (of which one is a robotic lawnmower), but the teachings herein may also be applied to other combinations of robotic work tools adapted to operate within a work area. In the example of figure 2 a first robotic work tool 100-1 and a second robotic work tool 100-2 are shown. Either, both or none of the first robotic work tool 100-1 and the second robotic work tool 100-2 may be a robotic lawnmower 100

The robotic work tool system 200 may also comprises charging station 210 which in some embodiments is arranged with a signal generator 215 and a boundary wire 220.

The signal generator is arranged to generate a control signal 225 to be transmitted through the boundary wire 220. To perform this, the signal generator is arranged with a controller and memory module 216. The controller and memory module 216 operates and functions in the same manner as the controller 110 and memory 120 of the robotic work tool 100. The controller and memory module 216 may also be the controller and memory module of the charging station, hereafter simply referred to as the controller 216.

In one alternative or additional embodiment the controller and memory module 216 may also comprise or be connected to a communication interface (not shown explicitly but considered to be part of the controller and memory module). The communication interface is enabled for communicating with other devices, such as a server, a personal computer or smartphone, a robotic work tool 100, another signal generator 215 and/or another charging station 210 using a wireless communication standard. Examples of such wireless communication standards are Bluetooth^{®}, WiFi^{®} (IEEE802.11b), Global System Mobile (GSM) and LTE (Long Term Evolution), to name a few. As also indicated above, the charging station 210 may also (alternatively or additionally) be arranged to communicate by transmitting information over the boundary wire (or other wires) for being detected by a magnetic sensor. As also indicated above, the charging station 210 may also (alternatively or additionally) be arranged to communicate by transmitting and/or receiving information when connecting with a robotic work tool through the charging plates 156 of the robotic work tool 100.

The boundary wire 220 is arranged to enclose a work area 205, in which the robotic lawnmower 100 is supposed to serve. The control signal 225 transmitted through the boundary wire 220 causes a magnetic field (not shown) to be emitted.

In one embodiment the control signal 225 is a sinusoid periodic current signal. In one embodiment the control signal 225 is a pulsed current signal comprising a periodic train of pulses. In one embodiment the control signal 225 is a coded signal, such as a CDMA signal.

The robotic work tool system 200 may also optionally comprise at least one beacon 212 to enable the robotic lawnmower to navigate the work area using the beacon navigation sensor(s) 190. In the example of figure 2, the beacon is arranged on the charging station 210, but it should be noted that any number of beacons 212 may be used at any location, inside or outside of the work area 205.

As an electrical signal is transmitted through a wire, such as the control signal 225 being transmitted through the boundary wire 220, a magnetic field is generated. The magnetic field may be detected using field sensors, such as Hall sensors. A sensor - in its simplest form - is a coil surrounding a conductive core, such as a ferrite core. The amplitude of the sensed magnetic field is proportional to the derivate of the control signal. A large variation (fast and/or of great magnitude) results in a high amplitude for the sensed magnetic field. The variations are sensed and compared to a reference signal or pattern of variations in order to identify and thereby reliably sense the control signal.

The work area 205 is in this application exemplified as a garden, but can also be other work areas as would be understood. The garden in this example contains a number of obstacles, exemplified herein by a number (3) of trees (T) and a house structure (H). The trees are marked both with respect to their trunks (filled lines) and the extension of their foliage (dashed lines). The garden in this example also contains a number of features, which in this example is a slope S and an area M known to (possibly regularly) be muddy and therefore difficult to traverse or navigate for the robotic lawnmower 100.

The work area 205 may be divided into two or more sub areas. **In** figure 2, there is shown two sub areas (although it should be noted that more sub areas are possible), a first sub area 205-1 and a second sub area 205-2. A divider 206 is also shown. The divider 206 may be a physical divider, such as a wire transmitting electromagnetic signals). Alternatively or additionally, the divider 206 is a virtual divider marking sub areas in the virtual map 125.

In figure 2, the first robotic lawnmower 100-1 is illustrated as having a larger size then the second robotic lawnmower 100-2. This is an illustrative manner of indicating that the robotic lawnmowers 100 may have different capabilities. The capabilities may relate to a type of work tool 160. The type of work tool may in turn relate to the function of the work tool 160 and thus the type of robotic work tool 100. The type of work tool 160 may also or alternatively relate to the capacity of the work tool 160, such as the size and/or efficiency of the work tool 160. The capabilities may alternatively or additionally relate to an operating range and/or a running capacity of the robotic lawnmower, such as the battery capacity or the runtime for the robotic lawnmower. The capabilities may alternatively or additionally relate to the capability of the robotic lawnmower to navigate work area features, such as the capability to climb slopes, travel through muddy or otherwise difficult terrain, perform steep turns or navigate through small openings/corridors. The capabilities may alternatively or additionally relate to a physical size of the robotic lawnmower, wherein a larger size indicates a capability of faster servicing of an area (due to an assumed larger work tool) whereas a smaller size indicates a capability of easier manoeuvring in tight areas.

The robotic work tool system 200 of figure 2 also comprises at least one server 230. In the example of figure 2, the server 230 is shown as being a standalone server outside the work area 205. However, it should be noted, and as would be realised, that the server may be arranged anywhere, including in the charging station, in a cloud service, as a dedicated service provider sever, in a communication device (possibly a user device 24), such as a smartphone, that may or may not be in connection with a further server, or act as a communication gateway with such a server. It should also be noted that even though the server 230 is shown as a single device in the example of figure 2, it may be a plurality of servers cooperating. The server 230 comprises a controller 231, a memory 232 and a communication interface 233. The controller 231 is, in one embodiment, of a similar type as disclosed in relation to the controller 110 of the robotic lawnmower 100. Likewise, the memory 232 is, in one embodiment, of a similar type as disclosed in relation to the memory 120 of the robotic lawnmower 100 and the communication interface 233 is, in one embodiment, of a similar type as disclosed in relation to the communication interface 115 of the robotic lawnmower 100.

In one embodiment, the system 200 also comprises a user device 240. The user device 240 is in one embodiment a smart phone, a tablet computer, a laptop computer, or a desktop computer.

The device 240 comprises a user interface that has an output device 245 for outputting or presenting data to the user of the user device 240, and an input device 246 for inputting or receiving user data and/or user commands from the user of the device 240. In one embodiment the output device 245 comprises a display, and the input device 246 comprises one or more buttons, virtual and/or physical. The device 240 further comprises a controller 241, a memory 242 and a communication interface 243. The controller 241 is, in one embodiment, of a similar type as disclosed in relation to the controller 110 of the robotic lawnmower 100. Likewise, the memory 242 is, in one embodiment, of a similar type as disclosed in relation to the memory 120 of the robotic lawnmower 100 and the communication interface 243 is, in one embodiment, of a similar type as disclosed in relation to the communication interface 115 of the robotic lawnmower 100.

The robotic lawnmower 100, the charging station 210, the server 230 and/or the user device 240 may thus any, some or all be arranged to communicate with any, some or all of the others for exchanging information and/or operating instructions.

In one embodiment the controller 231 of the server 230 is configured to receive information through the communication interface 233, process the received information, possibly based on information or data already stored in the memory 232, to provide operating instructions that are to be transmitted through the communication interface 233 to any, some or all of the robotic lawnmowers 100 and/or the charging station 210. The information may be received from any, some or all of the charging station 210, any, some or all of the robotic lawnmowers 100 and/or the user device 240.

Figure 3 shows one example embodiment of how the various devices of the robotic work tool system 200 of figure 2 may be arranged to communicate with one another. The server 230 is arranged to receive information from the one or more robotic work tools, in this example the first and the second robotic work tool 100-1, 100-2. The server 230 is, alternatively or additionally arranged to receive information from the charging station 210. The charging station 210 is, in one such embodiment, arranged to receive information from one or more robotic work tools 100. In this example, the charging station 210 is receiving information from the second robotic work tool 100-2. In one such embodiment the charging station 210 acts as a relay or gateway between the second robotic work tool 100-2 and the server 230, forwarding information received from the robotic work tool to the server 230. In one such embodiment, the charging station 210 performs some partial processing of the information before forwarding it.

The server 230 is also arranged to receive information from the user device 240. The information received from the user device 240 by the server 230 comprises at least information on user requirements for the operation of one or more of the robotic work tools and/or requirements for servicing the work area, or, optionally several work areas (including sub areas).

In one embodiment, the server 230 is also or alternatively arranged to receive information from a cloud service 250. The server 230 may in some embodiments be part of the cloud service 250. In some embodiments any, some or all of the information being transmitted in the robotic work tool system 200 is transmitted through the cloud service 250.

The user device 240 is, in one embodiment, arranged to receive information from one or more robotic work tools 100, in this example from the first and the second robotic work tool 100-1, 100-2. Likewise, the user device 240 is arranged to transmit information to the one or more robotic work tools 100. In one embodiment, the user device 240 is also or alternatively arranged to receive information from the charging station 210. Likewise, the user device 240 is arranged to transmit information to the charging station 210. Furthermore, the user device 240 is also arranged to receive information from the server 230. Likewise, the user device 240 is arranged to transmit information to the server 230.

Any, some or all of the robotic work tools 100 are, in one embodiment, arranged to receive information from the server 230. Also, or additionally, any, some or all of the robotic work tools 100 are, in one embodiment, arranged to receive information from the charging station 210. Also, or additionally, any, some or all of the robotic work tools 100 are, in one embodiment, arranged to receive information from the user device 240. Also, or additionally, any, some or all of the robotic work tools 100 are, in one embodiment, arranged to receive information from any, some or all of the other robotic work tools 100.

In one embodiment, the information received from and transmitted by the charging station 210, i.e. charging station information, relates to weather or other environmental data, which environmental data is determined by the charging station 210. In one such alternative or additional embodiment, the charging station information relates to information received from any, some or all of the robotic work tools 100 by the charging station 210, possibly after partial processing.

In one embodiment, the information received from and transmitted by a robotic work tool 100, i.e. robotic work tool information, relates to an operating status, such as battery status, run time, or time since maintenance. In one such embodiment, the robotic work tool information relates to an environmental status, such as load on work tool (indicating for example grass height), traction parameters, rolling resistance and/or load on the wheel motor(s). In one such alternative or additional embodiment, the robotic work tool information relates to map details for updating or supplementing the virtual map 125, which may also be stored in the memory 232 of the server 230 and/or in the memory 242 of the user device 240.

In one embodiment, the information received from and transmitted by a user device 240, i.e. user information, relates to user requirements (as is indicated in the above). In one such embodiment, the user requirements relate to the operation of one or more of the robotic work tools. Such user operation requirements may relate to a specific robotic work tool to be used, a specific robotic work tool model to be used, a specific type of robotic work tool to be used, a running time to be used for a robotic work tool.

In one such alternative or additional embodiment, the user requirements relates to requirements for servicing the work area, or, optionally several work areas (including sub areas). Such user servicing requirements may relate to a desired servicing degree (such as grass height), a desired scheduling of operation, a definition of sub areas, requirements for servicing such sub areas.

Any some or all of these user requirements may be combined in any manner desired by the user.

As is also indicated above, the server 240 is arranged to receive information, possibly from multiple sources, and to receive user requirements from the user device 240. The server is further arranged to perform central planning for operation in the work area 205 for servicing the work area 205 according to the specified user requirements, based on the information received. In one embodiment the central planning includes path planning for one or more of the robotic work tools 100. In one such embodiment the path planning is arranged to ensure that one robotic work tool does not interfere with another robotic work tool. In an alternative or additional such embodiment, the path planning is arranged so that a (sub) work area's features (environment, obstacles, and so on) is matched by a chosen robotic work tool's capabilities to ensure that an assigned robotic work tool is able to successfully execute the planned path.

The server 240 is further arranged to transmit operating instructions corresponding to the path planned to one or more of the robotic work tools 100. The operating instructions may be transmitted directly or indirectly for example via the charging station 210, the user device 240 or another robotic work tool 100.

**In** one embodiment, the path planning manners employed by the server 230 are automatically updated to change and adjust as needed due to changing demands and regulations as indicated by information received.

The information may be received from the robotic work tool. Alternatively or additionally, the information may be received from a remote source, such as for example an airfield controller. Alternatively or additionally, the information may be received through an application of the server.

As a result, the server 230, in one embodiment, is arranged to transmit updated operating instructions to the robotic work tool(s).

In one embodiment, the operating instructions are multi-dimensional such as specifying advanced movement patterns and/or specific operations at specific locations and/or times. In an alternative or additional embodiment, the operating instructions are one-dimensional such as specifying a path along a line, or a movement pattern.

In one embodiment, the path planning is processed and performed for solving an optimal path covering and resolving user requirements within constraints such as available energy, maximum number of traversals per area section and so on to mention a few examples. Other factors are also possible as discussed herein. In one embodiment, the path planning is processed and performed based on principles for mine planning.

In one embodiment, the operating instructions are detailed instructions for the robotic work tool(s) to follow, i.e. imperative path planning. In such an embodiment, the operating instructions includes one or more of which robotic work tool to be used, which work tool the robotic work tool should use, at what level (of efficiency, power or other measure of effectiveness of the work tool) to use the work tool, at what time to operate, at what area or location to operate, for how long to operate at a given area or location, a path to follow, a path generating manner (random, semi-random, square, rectangular, zick-zack, or more advanced manners and so on) to be used, to mention a few, any, some or all of which may be combined.

In an alternative and additional embodiment, the operating instructions are specified as a localized (sub) area servicing requirement to be solved autonomously by the receiving robotic work tool(s), i.e. declarative goal-oriented mode or distributed planning mode. As contemporary robotic work tools are often able to solve or resolve requirements for an area, the server 230 is thus arranged to distribute (sub)areas to suitable robotic work tools based on the capabilities of the robotic work tools, wherein the robotic work tool are arranged to provide a plan for reaching the service requirements in respect of the selected area. The requirements may be broken down in to specific functions that need to be performed for fulfilling the requirements. Using such planning, prior art robotic work tools may be utilized possibly in combination with more advanced robotic work tools after only a smaller software update.

In one such embodiment, the operating instructions relate to more than one robotic work tool, such as a first and a second robotic work tool 100-1 and 100-2. In such an example of such embodiment, the first robotic work tool 100-1 and the second robotic work tool 100-2 are arranged to exchange information on each other's capabilities. The exchange may be one-way (the first robotic work tool 100-1 sharing to the second robotic work tool 100-2) or two-way (the first robotic work tool 100-1 sharing to the second robotic work tool 100-2 and the second robotic work tool 100-2 sharing to the first robotic work tool 100-2). Sharing herein is understood to include generating a message comprising one or more capabilities of the robotic work tool, and transmitting that message to the other robotic work tool. This enables a robotic work tool receiving capabilities of another robotic work tool to compare the capabilities of the other robotic work tool to its own capabilities and matching them against capabilities needed to fulfil the requirements best. Especially, to find the robotic work tool that best fulfils a part of the requirements. The robotic work tool receiving the capabilities will thus be able to plan for which robotic work tool performs which function to fulfil the requirements, and to optimize the instructions for the robotic work tools so that the requirements are fulfilled in an optimum or at least efficient manner. The efficiency may be based on total time to achieve the overall results, running time for an individual robotic work tool, efficiency of work for a robotic work tool to mention a few factors. This enables the robotic work tool to autonomously solve a requirement thus performing on a local manner, by delegating the functions and cooperating to solve them.

Hence, the server 230 does not need to determine detailed path planning for each robotic work tool, but rather divide and conquer where different robotic work tools may share the work area to be processed.

In a combined embodiment, the work area is divided into sub areas for which detailed instructions are provided.

The inventors have realised that there is problem in the evolution of contemporary robotic work tool systems. As robotic work tool systems become more and more advanced, they also rely on a larger body of data to perform their operation, such as user schedule, maps or area information regarding a user's home (or property). Furthermore, as vision-based systems are being developed, visual data is collected and possibly stored. Much of such data may comprise sensitive information that a user may not be willing to share, and data that should not be stored centrally. Furthermore, legislative local demands and requirements may put requirements on the data that may be gathered and stored to protect a user's privacy.

To enable such data privacy protection, the robotic work tool system 200 is arranged, in one embodiment, to employ a data anonymous function that renders any data received by the server 230 anonymous, thereby obscuring the true identity of private data and sources, sensitive images, and true locations.

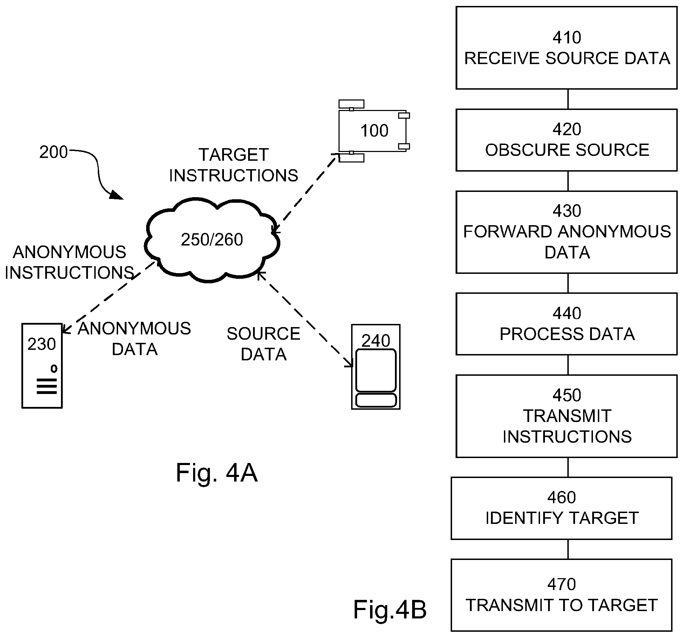

Figure 4A shows a subsection of a robotic work tool system 200, as that discussed in relation to figures 2 and 3, and how the system 200 is arranged to provide anonymous data to the server 230 according to one embodiment. In this example the server 230 is illustrated as receiving information from a source, here exemplified by the user device 240, through the cloud service 250. As discussed herein, the server 230 may receive information form any entity either directly or via the cloud service 250. As also disclosed herein, the server 230 may be part of the cloud service 250, even though illustrated as a standalone device - which is mainly for illustrative purposes. In this example the service 250 comprises the data anonymous function 260. However, it should be noted that any, some or all of the other devices of the robotic work tool system 200 may also be arranged to comprise or carry out parts of or the full data anonymous function 260.

In one embodiment, the data anonymous function 260 is implemented as software, hardware or a mix thereof. In one embodiment, the data anonymous function 260 is implemented as a module or component of another device to be executed by that device, and in one embodiment, the data anonymous function 260 is implemented as a standalone device executing the data anonymous function 260.

Figure 4B shows a flowchart of a general method for the function of the data anonymous function 260 is according to the teachings herein. The functionality of the data anonymous function 260 will be discussed with relation to figures 4A and 4B simultaneous.

The data anonymous function 260 receives 410 source data form a source, such as from the user device 240. The source data is processed by the data anonymous function 260 so that the source of the data is obscured 420. In one embodiment the source of the data is removed. In an alternative or additional embodiment the source of the data is replaced by a replacement source. A replacement source enables any returning instructions or data to be accurately delivered to the correct source. It also enables any subsequent processing to group received source data for a specific source without actually knowing which source it is. This provides anonymous data that is transferred or forwarded 430 for further processing in this example by the server 230. The anonymous data is processed 440, which - in one additional embodiment - results in anonymous instructions. The anonymous instructions are in such a case transmitted 450 to the data anonymous function 260 for delivery to a target device, such as a robotic work tool 100. The data anonymous function processes the anonymous instructions to identify 460 the target device 100 and then transmits 470 the instructions to the target device 100. The data anonymous function is arranged in one embodiment to identify the target device based on the source identity which it may determine based on a replacement identity (i.e. the replacement source) carried in the anonymous instructions.

In one embodiment the data anonymous function 260 is encrypted using encryption keys that are not available to neither the server 230 nor any of the other devices. Which enables for data privacy protection to be enabled. The server 230 will simply be unaware of the identity of the user to which the instructions ultimately apply to.

This enables for centralised planning based on private data to be achieved without posing any risks to the protection of the user's privacy.

The inventors have also realized, through inventive and insightful reasoning, that contemporary robotic work tool systems are specific and based on the actual robotic work tools. The robotic work tool is enabled to learn an area, and to operate therein most efficiently. The inventors have also realized, through inventive and insightful reasoning, that makes it cumbersome to replace a robotic work tool or enable a robotic work tool to service more than one location as the robotic work tool needs to relearn a new area every time it is moved. A conventional robotic work tool installation is specific and static to a geographic location. For professional use of such robotic work tools, it is would be beneficial as the inventors have realized to have robotic work tools that are exchangeable and/or can be moved between different locations, which for contemporary robotic work tools is an inflexible and time consuming operation that needs to be carried out each time a robotic work tool is moved. The inventors are therefore proposing an improved manner of providing operating instructions that overcome or at least mitigate such problems

In one embodiment, the service requirements are related to a specific area and are - at least in part - based on physical features of the area. The physical features relate to one or more of physical extent (such as the borders of the area), geographical and/or environmental features within the work area (such as slopes, muddy areas, trees, houses, flower beds, and so on), sub areas (user-defined and/or defined by the server based on work to be performed). In one additional embodiment, the service requirements are based on user requirements of the area. The user requirements relate to one or more of an operational goal (such as the height of the cut grass for a lawnmower), a time for operation, paths to be taken and or prioritized and so on.

The service requirements are specified by a user or by a service provider on behalf of the user. The service requirements may be generated from scratch or by starting from a template. The physical features may be specified based on a map of the work area. The map may be provided by a robotic work tool traversing the work area (such as at an initial setup). Alternatively or additionally the map may be provided by a geological service based on a location that may be input/provided by the user or sensed by the robotic work tool. Such a map may be presented in the user device for enabling the user to specify further requirements based on the map.

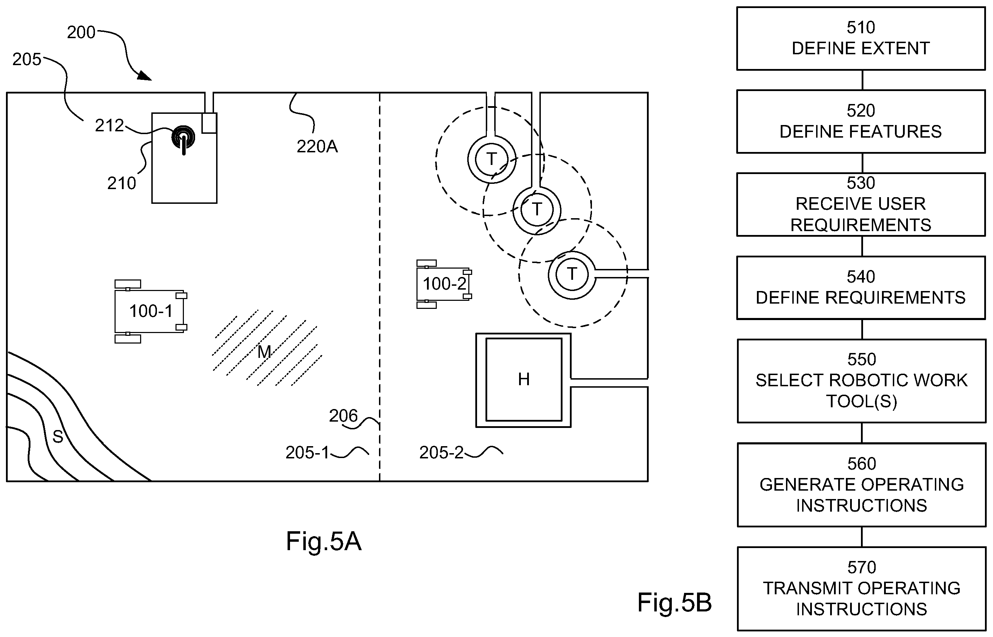

For providing the service requirements a method is provided. Figure 5 shows a flowchart for such a general method according to one example embodiment according to the teachings herein for providing service requirements for a robotic work tool system 200 as discussed in relation to previous figures. The outer boundary 220A, i.e. the extent of the work area 205, is defined 510. The outer boundary 220A is in one embodiment defined by coordinates. Alternatively or additionally the outer boundary 220A is in one embodiment defined by directions (relative or absolute) and lengths of extensions, i.e. a vector-like definition. Alternatively or additionally the outer boundary 220A is in one embodiment defined based on an image, such as a photograph of the area. Alternatively or additionally the outer boundary 220A is in one embodiment defined by a user providing graphic input on a user device 240, possibly based on an image of the area. Alternatively or additionally the outer boundary 220A is in one embodiment defined based on data provided by a robotic work tool at an initial traversal of the work area (as discussed above). In one embodiment, the boundaries and/or features (see below) may be updated based on information received from a robotic work tool during traversal of the work area.

These sources of defining information may also be utilized for defining other features or boundaries as discussed below.

Optionally sub areas 205-1, 205-2, i.e. work areas, within the work area 205 are defined. The sub areas 205-1, 205-2 may be specified by one or more dividers 206 in relation to the outer boundary 220A and/or by boundaries for a specific sub area 501-1, 502-2. The definition of sub areas may be provided by a user. Alternatively or additionally the definition of subareas may be provided by a controller, of the server 230 or of the user device 240. In such an embodiment, the definition of subareas is based on the specific features and/or capabilities of available robotic work tools.

Additionally or alternatively, the robotic work tool is enabled to define the border of sub area(s) based on a coarse planning which is refined by on-board sensors (identifying the ground) and the task at hand. Additionally or alternatively, the definition of subareas is based on machine learning.

In addition to defining the extent of the work area, specific features are defined 520 (which may be defined when defining the extent or at a later stage or both, some features defined when defining the extent, and some at a later stage). The features include one or more of areas of special consideration for navigation (such as slopes S or muddy areas M), location of charging station 210 (if any), location of beacon 212 (is any), location of obstacles (such as trees T, houses or building H, flower beds and so on if any) to mention a few examples.

User requirements are received 530 via the user device 240.

Service requirements are defined 540 based on the user requirements. In one embodiment, the service requirements include one or more of the (sub) areas that work is to be performed. For such area for which work is to be performed on, the type work that is to be performed is specified in one embodiment, for selection of appropriate type of robotic work tool, for example for cutting grass a robotic lawnmower is selected. Alternatively or additionally the quality of the work to be performed is defined based on the user requirement. The quality of work is defined differently for different types of work, but relate to the effectiveness desired. For example, for a robotic lawnmower the resulting height of cut grass may be specified by the user.

In one embodiment, the service requirements include time restrictions for at least one (sub) work area. Such time restrictions may relate to what times the (sub)area may be worked on and/or how long times the (sub) area may be worked on. The time requirements may also be associated with operating restrictions (see below for examples), indicating times when such operating restrictions are applicable.

In one embodiment, the service requirements include operating restrictions. The operating restrictions include one or more of speed limits, noise levels, acceptable levels of produced debris, to mention a few examples.

As the work area and the service requirements have been defined, the robotic work tool system (in one embodiment through the central planning of the server 230) is arranged to select appropriate robotic work tool(s) 550 (by matching capabilities of the robotic work tools to the requirements). As discussed herein multiple robotic work tools may be selected. The robotic work tool(s) may also or alternatively be selected by simply be provided or specified by the user.

The robotic work tool system (in one embodiment through the central planning of the server 230) is further arranged to provide a path planning for the selected robotic work tool(s) based on the available information to match the requirements, i.e. to generate operating instructions 560 and transmit them to the selected robotic work tool(s) 570.

As the robotic work tool(s) is put to work, it is - in one embodiment - arranged to gather and transmit data relating to the work area (as indicated above) so that the path planning (and possibly the selection of robotic work tool) may be updated. The path planning is thus updated based on received data relating to the work area from the robotic work tool(s).

The data and information gathered by and/or receivable from a robotic work tool according to herein include but are not limited to examples given above in addition or as alternatives to heat map (e.g. time since last processing; last processing height, estimated vegetation height/volume according to growth model), local energy usage on an area, local speed restriction induced by rough surface, redefined area boundaries, detected vulnerable objects (i.e. objects which shall not be run over e.g. larger stones etc.) slippery surfaces, higher resolution inclination of slopes, category/type of vegetation, local areas which causes operating disturbances, quality of work execution, expected conditions based on weather reports.

As discussed above and herein, based on such information, the system may continually plan, optimize and commission work to be performed on the site by the autonomous machines or by a person. Operating instructions include a boundary with parameters which the robotic work tool shall follow, and optionally waypoints with parameters for work tool actuation which the robotic work tool should follow.

As the work is carried out, autonomous robotic work tools may use on-board perception functions to redefine specified boundaries, report obstacles previously not known to the system and surface conditions or other environmental features. Robotic work tools may also report work carried out (and possibly assess and report the quality of the performed work). Subsequent planning will always be based on the latest augmented site data, including work heat map, reported obstacles, refined boundaries, surface condition and so on. In such a robotic work tool system 200 consisting of multiple robotic work tools that perform out work assignments, the proposed technical solution provides ease of use and flexibility. The system is thus configured to redefine the extent and/or features of the work area based on the received data and to update the path panning accordingly

It should be noted that a user is thus not simply able to provide a map or define areas, but is actually enabled to provide actual instructions for how those areas should be serviced.

In an alternative or additional embodiment, it may further be noted that the robotic work tool system comprises the following main components:
A number of connected robotic work tools that can be used for carrying out the work

A planning and control system (i.e. one aspect of the server 230, possibly in combination with the cloud service 250) where the work area is set up, managed, and tasks and operations for the robotic work tools are planned and monitored during operation.

A supporting system with business and operational support systems (i.e. an additional aspect of the server 230, possibly in combination with the cloud service 250) for service delivery and maintenance of a fleet of robotic work tools or their tools in the field.

Based on the received service request, the server (possibly in combination with the cloud service 250) is thus arranged to perform at least the following functions:
Planning of operations for robotic work tools
Control of ongoing tasks of robotic work tools
Devising how to offer the service to the customers
Determining charges levied to the customer
Maintaining a desired or requested level of service
Ordering and/or planning installing, maintaining, and/or de-commissioning, etc of the installation.

Utilizing such central planning and maintenance allows for offering one or more robotic work tools as a service, where a user provides service requirements, possibly by simply entering the address and selecting a service package. The server (possibly in cooperation with the cloud service 250) is thereby enabled to plan and provide robotic work tools that fulfil the requested service requirements.

In one embodiment the central planning system is enabled to retrieve and store information regarding performed services, such as time for completion, results achieved or the quality of service achieved (for example grass height achieved, volume of snow ploughed, length or area serviced, to mention a few manners of measuring results and/or quality). The planning may be further enabled to utilize such historic data as input or as a parameter for planning of future tasks. In one such embodiment, the planning system is enabled to learn from such historic data utilizing machine learning.

Furthermore, in an embodiment, the planning system may be associated with an accounting or charging module which is enabled to provide an estimate for costs associated with a task or service. In one embodiment such costs are based on the historic data - at least in part, wherein the planning system is enabled to, based on historic data, estimate the cost of a future task or service. The cost-estimate may be provided using known technologies which would be chosen depending on the actual service or task to be performed.

In one embodiment, the cost-estimate may be provided as a cost to be charged to a client, and thus also charged not only being an estimate, but an actual charge.

In one embodiment the planning system is further enabled to perform a simulation of the planned task or service in order to verify that the plan is adequate.

The simulation may be provided using known technologies which would be chosen depending on the actual service or task to be performed.

In one embodiment, the planning system may also provide a visualisation of the simulation and/or of the proposed planning which visualisation may be monitored by an operator for final approval of the proposed planning of the future task or service.

The visualization may be provided using known technologies which would be chosen depending on the actual service or task to be performed.

The inventors have further realized after inventive and insightful reasoning that in the contemporary society, much information is already readily available.

The inventors have also realized that many users struggle to provide an accurate map of their work areas which lead to improper or inefficient operation in such areas.

The inventors have further realized after inventive and insightful reasoning a simple and elegant manner of overcoming this problem of properly defining a work area, a problem that has been around for a long time.

The inventors are proposing a map generation function to provide the map 125 of the work area 205 in a robotic work tool system 200 as discussed in relation to any, some or all of the figures discussed herein, by retrieving a representation of the work area from an external service, herein exemplified by the cloud service 250. In one embodiment the representation of the work area comprises an image, such as a satellite image, of the work area. In one embodiment the representation of the work area comprises map data for the work area. In one embodiment the representation of the work area comprises a satellite image of the work area and comprises map data for the work area. The map may be three dimensional or two dimensional.

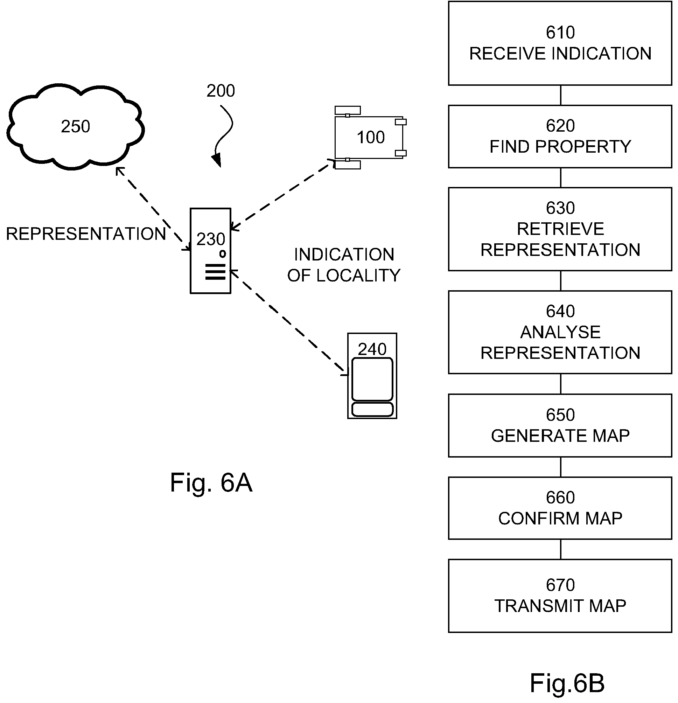

Figure 6A is a schematic view of a subsection of the robotic work tool system as discussed in relation to any, some or all of the figures discussed herein and figure 6B is a flowchart for a general method according to herein for providing the map 125 of the work area 205 according to one example embodiment of the teachings herein.

In one embodiment the robotic work tool system 200 (through the user device 240, the server 230 or the cloud service 250), herein exemplified by the server 230, is enabled to provide such a map 125 by receiving 610 an indication of the locality of the work area 205.

In one embodiment, the indication of locality is received from a robotic work tool 100 placed in the work area. The robotic work tool is configured to determine a present position and transmit this position as the indication of locality.

In one alternative or additional embodiment, the indication of locality is received from the user by the user entering the address (street address or property identifier) for the property of the work area. In one alternative or additional embodiment, the indication of locality is received from the user by the user entering coordinates (street address or property identifier) for the property of the work area.

The indication of locality is matched 620 against land properties in a database for finding a matching property or area. In one embodiment, the database is a survey database, a map database, an address lookup database, or similar.

The representation of the work area is retrieved 630 from the database for the matching property and analysed 640 for defining the work area 205, and possibly also specific features of the work area and thereby generating 650 the map 125 of the work area 205.

In an embodiment where the representation comprises an image, the analysis is performed based on image analysis of the image to determine boundaries and any specific features using known (and yet to be developed) image analysis tools.

In an embodiment where the representation comprises map data, the analysis is performed by extracting the needed data to define the boundaries and any specific features.

The user will thus be able to define the work area, and also specific features, by simply giving an address (or coordinates) for the work area or by placing the robotic work tool in the work area. This provides for a highly simplified provision of the map 125.

The map 125 may be presented to the user through the user device 240, for correction, supplementation and/or confirmation 660. The map 125 is transmitted 670 to the user device 240 and/or the robotic work tool 100. In an embodiment where the map 125 is transmitted to the user device, it is (at least in part) transmitted before it has been confirmed to be confirmed.

In one embodiment the map 125 is arranged to be updated based on input received from the robotic work tool 100. The input received from the robotic work tool 100 may relate to environmental features.

In one such embodiment, the map 125 is updated by the controller of the robotic work tool 100, wherein the controller 101 of the robotic work tool 100 receives the input from various sensors of the robotic work tool 100.

In one alternative or additional such embodiment, the map 125 is updated by the controller of the charging station 210, wherein the controller of the charging station 210 receives the input from the robotic work tool 100, directly or indirectly.

In one alternative or additional such embodiment, the map 125 is updated by the controller of the user device 240, wherein the controller of the user device 240 receives the input from the robotic work tool 100, directly or indirectly.

In one alternative or additional such embodiment, the map 125 is updated by the controller of the server 230, wherein the controller of the server 230 receives the input from the robotic work tool 100, directly or indirectly.

In one alternative or additional such embodiment, the map 125 is updated by the cloud service 250, wherein the cloud service 250 receives the input from the robotic work tool 100, directly or indirectly.

In one alternative or additional such embodiment, the map 125 is updated by the cloud service 250, wherein the cloud service 250 receives the input from an external system.

As indicated by the alternative or additional such embodiments, the map may be updated by several entities, partially or completely.

As indicated above, much of the work performed by robotic work tools are done in areas where there is debris, such as leaves in a garden or park. As is also indicated above, much of the work performed by robotic work tools generates debris, such as grass cutting. The debris generated is sometimes directly ejected from the robotic work tool, but can also sometimes be dropped from the robotic work tool, both during operation or during transportation.

Some solutions have been proposed where a robotic work tool is arranged to carry the debris in a collector, such as a bucket or bag, for later disposal at a wanted location. However, this requires specified hardware and is also not 100 % as some debris may be dropped and/or ejected involuntarily from the robotic work tool. The collector also fill up and requires emptying, whereby the robotic work tool need to pause its main operation to empty the collector.

The inventors have realised that not all areas of a work area 205 are sensitive to debris and are therefore proposing to note such sensitive areas in for example the map 125.The sensitive areas are in one embodiment indicated as environmental features, alone or as part of other features. In an alternative or additional embodiment, the sensitive areas are indicated as sub areas 205-1, 205-2.

The sensitive area, may be indicated as being sensitive by being assigned a sensitivity ranking.

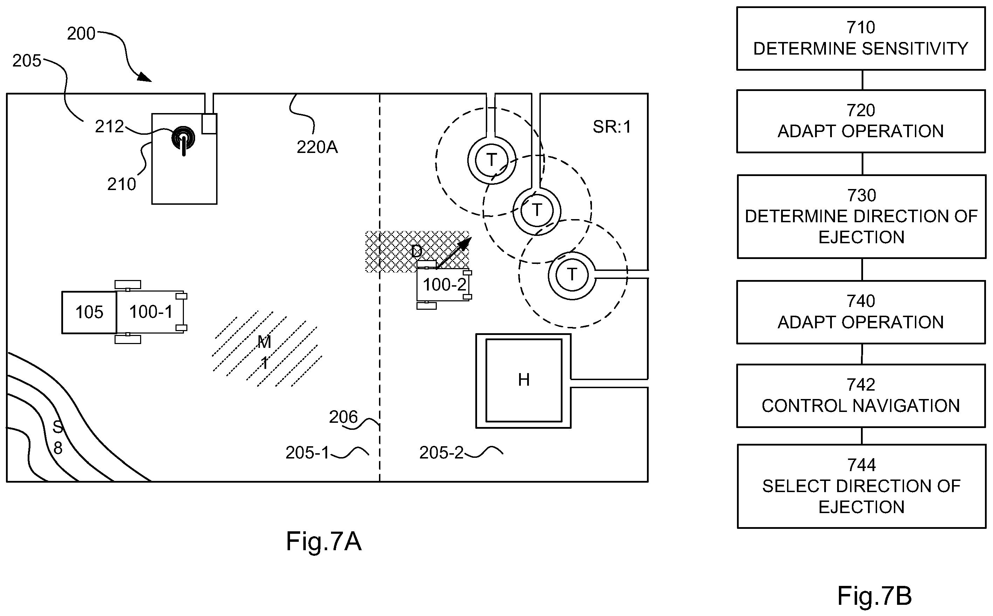

Figure 7A shows a schematic view of a robotic work tool system 200, such as in other figures herein, where the environmental features have been supplemented with sensitivity rankings. For example, the muddy area M has been assigned a sensitivity ranking of 1 and the slope S has been assigned a sensitivity ranking of 8. Also, standalone areas have also been indicated with SR to indicate a sensitivity ranking for that area. For example the area behind the trees T are assigned a sensitivity ranking SR: 1. In this example a low ranking indicates a low sensitivity and a high ranking indicates a high sensitivity. It should be noted that the values or form of the sensitivity rankings may vary greatly and are not of a primary importance, and that although exemplified herein by numbers, they may in an implementation be of any format.

The planning for the operation of the robotic work tool 100 is thus enable to take into account the sensitivity of an area to debris based on the sensitivity rankings, and to adapt the operation of the robotic work tool 100 accordingly.

In the example of figure 7A, the planning may be adapted so that the robotic work tool engages a collector 105 that is comprised in the robotic work tool 100 (possibly by being attached to the robotic work tool 100) only when servicing sensitive areas, such as the slope S. The planning may be adapted so that the robotic work tool empties the collector 105 when passing through insensitive areas such as the muddy area M or behind the trees T, the muddy area M then being filled up with debris, and the area behind the trees T possibly acting as a dumping location.

The inventors have also realised that by knowing the direction that debris is ejected, it is possibly to plan how a robotic work tool will eject the debris, so that the debris may be ejected in a manner that is less disturbing. In the example of figure 7A, the arrow radiating out from the second robotic work tool 100-2 indicates the direction of ejecting the debris. The planning may thus be adapted so that the robotic work tool 100-2 only pass the house in such directions so that the debris is ejected away from the house.

The inventors have also realised that the debris being ejected in one direction will form a path of debris. In the example of figure 7A, the debris path is indicated by the marked area next to the second robotic work tool 100-2. Alternatively or additionally, the planning may therefore be adapted so that the robotic work tool 100 will travel over the debris path subsequently, thereby reducing the impact of the debris path by servicing the debris path specifically. For a robotic lawnmower the debris path is the trail of cut grass, and as the robotic lawnmower travels over the cut grass, it will act to mulch the cut grass, thereby reducing its impact. The robotic work tool may, by planning how the debris path is travelled taking into account the direction of ejecting the debris, even act to move the debris by repeatedly ejecting it in a given direction.

In an additional or alternative embodiment, the planning may also be adapted so that the direction of ejection is selected so that debris is ejected in a desired direction.

For a robotic lawnmower 100, the direction of ejection will depend not only on the construction of the robotic lawnmower, but also on the direction of rotation of the cutting tool 160. By selecting the direction of rotation, the direction of ejection may also be selected.

It should be noted that even though the description herein in this aspect is focused on debris being grass cuttings, the teachings may also be applied to other debris, such as mud and sand to mention a few. Depending on the type of robotic work tool and the parameters of the associated work tool 160, the ejection may be controlled. The parameters of the work tool may be controlled based on knowledge of the type of debris being ejected. For example, the speed of the tool and/or direction of rotation of the tool may be controlled based on a flow rate of the debris and a known or estimated average weight or other projectile characteristic of the expected or associated debris so that an appropriate or desired trajectory of the ejected debris may be determined and achieved through controlling the parameters of the work tool 160.

In one embodiment, the robotic work tool is further configured to determine or control the direction of ejecting the debris based on knowledge of the area being serviced, such as represented in a map application. The map application may denote sensitive areas that the robotic work tool should avoid ejecting debris into. Alternatively or additionally, the planning may take such areas into account and provide a path planning that avoids ejecting debris into such sensitive areas. For example a robotic lawnmower servicing an airfield may control the ejection of the grass cutting so that they are not ejected onto the airstrip, either by controlling the actual direction of the ejection or by planning a route so that the (presumably fixed) direction of the ejection is always away from the airstrip when close to (within range of the ejection) the airstrip. Naturally, the path planning may be combined with a control of the actual direction of ejection.

In one embodiment the robotic work tool is further configured to determine or control the direction of ejecting the debris so that the debris is left in a pattern or arrangement that is easy to collect or suitable for collection. The grass cuttings may for example be left in a string so that it is easy to direct a collecting robotic work tool to collect the grass cuttings in one simple pass.

In one embodiment the work tool 160 is arranged with a nozzle or other outlet guide, which is controlled or directed in order to provide a desired direction of the ejected debris.

The control of the ejection of the debris is in one embodiment part of the central planning, whereby the planning of the service or task includes instructions for how and/or where to eject the debris. Figure 7B shows a flowchart for a general method according to herein where the planning is adapted according to the debris. The planning may be performed, as indicted above, by any, some or all of the server 230, the cloud service 250, the user device 240, the charging station 210 or the robotic work tool 100.

The sensitivity of an area is determined 710 and the operation is adapted accordingly 720. The operation may be adapted by adapting or generating the operating instructions based on the sensitivity for debris of the area(s).

Alternatively or additionally the direction of ejection is determined 730 and the operation is adapted 740. The operation may be adapted by adapting or generating the operating instructions. The operation may be adapted by controlling 742 the navigation of the robotic work tool 100 so that debris is not ejected into sensitive areas, by traversing the debris path, by pausing the work tool in such sensitive areas and/or by pausing and waiting for a dynamic (i.e. movable) object (such as a pet) to pass. Alternatively or additionally the operation may be adapted by 744 selecting a direction of ejection.

Contemporary robotic work tools are arranged to operate according to a schedule which indicates when and for how long an area is to be serviced. However, the inventors have realized several problems associated with such scheduling. The scheduling is at best based on previous operations and measurements of an achieved level or quality of service. For example, if it determined that the grass is not at a desired level, a future timeslot will be increased in time so that enough time may be provided to achieve the desired level. However, the circumstances may change from one operation to another, so it is not certain that the desired level is achieved, or it may be achieved but at a waste of time.

Furthermore, while a robotic work tool is operating according to its schedule it is tied to that schedule and may not optimise its functionality as regards other tasks such as servicing another area.

The inventors are therefore proposing a new manner of specifying tasks. Instead of specifying a schedule, the inventors are proposing to enable the user to request specific services which indicate an area and a level or quality of service for that area. The planning for the robotic work tool will then be performed so that a service is not started until a previous service has been completed. The planning will thus be based on a queue of one or more tasks or services. As the service is related to an area, the queue of services may be arranged according to the associated areas.

In some instances a task or services may be halted before it has been completed. There are many reasons why a task or service may be halted, for example an object marked as sensitive (for example a pet or a child) enters the work area, whereby the robotic work tool is instructed to halt any activities. As favourable operating instructions are achieved again (i.e. the reason for the halting is removed), the robotic work tool is, in one embodiment, configured to determine whether the halted task should be resumed or if another task should be started. As the robotic work tool may have spent some energy in the halted state, it may not have enough power to complete the planned task or service, wherefore it may be better to halt the current operation and utilize whatever resources that are remaining to complete another (smaller or less intense) task or service, before returning to the charging station.

Examples of robotic work tool status parameters that may be taken into consideration includes but are not limited to results achieved so far, estimated remaining time, estimated remaining power consumption, battery status, remaining operable range of the robotic work tool, indications of wheel slip over or below expected values (which would affect the remaining operable range of the robotic work tool), servicing or work tool efficiency. Examples of operating parameters that may be taken into account includes but are not limited to central planning directives, schedules, time of day, historic results and other historic data. By matching the parameters to one another, i.e. by matching the (remaining) service requirements to the remaining resources, the robotic work tool may determine whether an ongoing task is still possible to complete. If not, another task may be started. The service requirement may relate to the halted service or they may relate to another service. Whichever service whose requirements match the resources may be the one selected for continued operation. Examples of actions taken includes but are not limited to:
a) continued operating from the path position last serviced,
b) termination of previous path in favour to optimizing operation of a front area with a perfect result, such as prioritizing the cutting of the grass in a front part of a garden, so that the garden at least looks good from the outside,
c) temporary decision to service a new priority area and then return to a) continued operating from the path position last serviced as a new task may have been received while the current one was halted, or
d) rescheduling to re-allocate work to other robotic work tools.

The controller of either the robotic work tool or the robotic work tool system is thus configured to determine that a service is to be halted, determine at least one service requirement of at least one service to be continued, determine at least one resource of the robotic work tool, match the at least one service requirement to the at least one resource, and select the service to be continued based on the matching.

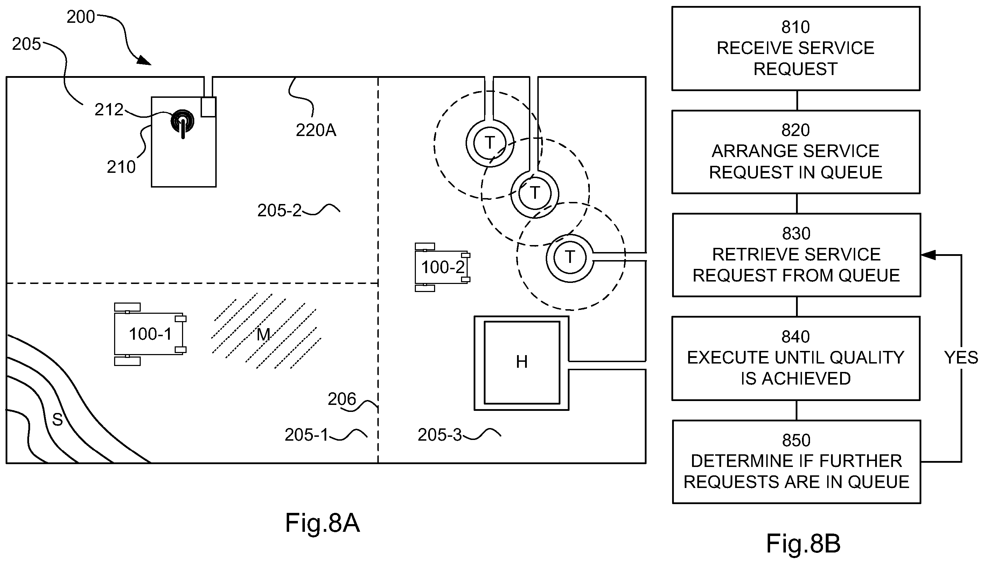

Figure 8A shows a schematic view of a robotic work tool system 200 as in other figures herein. In the example of figure 8A, the work area 205 is comprised of three sub areas 205-1, 205-2, 205-3. Figure 8B shows a flowchart for a general method according to herein. The server 230 (or other entity performing the planning for the robotic work tool(s)) receives 810 user requirements as has been discussed herein. In one embodiment, the user requirement comprises one or more service requests at least some of which each indicates an area, a type of work and a quality of the work for that area. The planning is performed by arranging the service requests in a queue 820 according to the areas and/or type of work for that area. The service requests may be arranged in order of adjacent areas. The service requests may be arranged in order of adjacent areas for a type of work. The service requests may be arranged in order of the area's location relative a feature. In the example of figure 8A, the first robotic work tool 100-1 is selected to operate in sub areas 205-1 and 205-2. As sub area 205-1 is farthest from the charging station 210, the service request for the first sub area 205-1 is arranged first in the queue for the first robotic work tool 100-1 and the service request for the second sub area 205-2 is arranged subsequently in the queue for the first robotic work tool 100-1.

In systems, such as the one in figure 8A, where multiple robotic work tools are employed, the planning may be based on a service request queue for each, some or all of the robotic work tools. In the example of figure 8A, the second robotic work tool 100-2 is selected to operate in sub area 205-3 and the service request for that sub area 205-3 is arranged first in the queue for the second robotic work tool 100-2

When executing the plan, the robotic work tool retrieves 830 a service request from its queue of service requests and executes that service until the indicated quality of work is achieved 840, whereby a next, if any 850, service request is retrieved and executed.

The service requests may alternatively or additionally be arranged with a priority, in which case, the service request queue is arranged based on the priority of the service request(s), possibly in addition to the area of the service request(s).

This allows for a desired result to be achieved every time and without wasting time. This also allows for the robotic work tool system to not be sensible to circumstances.

It also allows for the robotic work tool system to not require any re-planning if one action is hindered. The system will simply continue when the hindrance is removed.

It should be noted that service requirements as discussed herein include, but are not limited to an operational goal (such as the height of the cut grass for a lawnmower), a time for operation, paths to be taken and or prioritized, include time restrictions for at least one (sub) work area, operating restrictions (speed limits, noise levels, acceptable levels of produced debris, to mention a few examples) and so on.

It should also be noted that operating instructions as discussed herein include, but are not limited to instructions for navigating a path, instructions for navigating a pattern, instructions for navigating to a location, detailed instructions for the robotic work tool(s) to follow, i.e. imperative path planning. which robotic work tool to be used, which work tool the robotic work tool should use, at what level (of efficiency, power or other measure of effectiveness of the work tool) to use the work tool, at what time to operate, at what area or location to operate, for how long to operate at a given area or location, a path to follow, a path generating manner (random, semi-random, square, rectangular, zick-zack, or more advanced manners and so on) to be used, specifications for a localized (sub) area servicing requirement to be solved autonomously by the receiving robotic work tool(s), i.e. declarative goal-oriented mode or distributed planning mode, speed limits, noise levels, acceptable levels of produced debris, include a boundary with parameters which the robotic work tool shall follow, and optionally waypoints with parameters for work tool actuation which the robotic work tool should follow

It should also be noted that area features (environmental and specific) as discussed herein include, but are not limited to gradients, slopes or other factors affecting navigation in the work area, muddy areas, obstacles, trees, houses, flower beds, and so on, areas of special consideration for navigation and/or safety-related features.

It should also be noted that restrictions as discussed herein include, but are not limited to time restrictions, speed limits, noise levels, acceptable levels of produced debris.

It should also be noted that operating efficiency or quality of operation as discussed herein include, but are not limited to grass height achieved, volume of snow ploughed, length or area serviced.

It should also be noted that robotic work tool capabilities as discussed herein include, but are not limited robotic work tool size, attachment (or work tool) type, work tool size, expected or allowed runtime hours, energy consumption, maintenance requirements, capability of the robotic lawnmower to navigate work area features, such as the capability to climb slopes, travel through muddy or otherwise difficult terrain, perform steep turns or navigate through small openings/corridors, a physical size of the robotic lawnmower, wherein a larger size indicates a capability of faster servicing of an area (due to an assumed larger work tool) whereas a smaller size indicates a capability of easier manoeuvring in tight areas and other data needed for cost estimation.

It should also be noted that the capabilities may be the current capabilities. For example not only the total range of the robot, but the current range, i.e. remaining range, is considered a current capability to mention one example of a capability and the current capability.

## Claims

1. A robotic work tool system (200) comprising a server (230), a user device (240) and one or more robotic work tools (100, 100-1, 100-2), the server comprising a controller (231), the controller (231) being configured to:
define (510) an extent of a work area (205);
define (520) features of the work area;
receive at least one user requirement from the user device (240), wherein the user requirements include user servicing requirements relating to a desired servicing degree, the user servicing requirements relate to one or more of an operational goal, a time for operation, and/or paths to be taken and/or prioritized;
define (540) service requirements based on the extent of the work area, the features of the work area and the user requirement, the service requirements being related to the work area and are - at least in part - based on physical features of the work area, wherein the physical features relate to one or more of physical extent, geographical and/or environmental features within the work area, sub areas;
select (550) one or more of the one or more robotic work tools (100) based on capabilities of the robotic work tools (100) by matching the requirements to the capabilities of the robotic work tools;
generate (560) operating instructions for the selected robotic work tools (100); and to
transmit (570) the operating instructions to the selected robotic work tools (100), wherein the robotic work tool system (200) is **characterized in that** the controller (231) is further configured to define (510) the extent of a work area (205) and define (520) features of the work area by
receiving (610) an indication of a location of a property of the work area;
retrieving (630) a representation of the indicated property of the work area; and
analyzing the representation (640) for defining the work area (205) and features of the work area (205) and thereby generating (650) a map (125) of the work area 205;and to
generate (560) the operating instructions for the selected robotic work tools (100) based on the map of the indicated property, wherein the controller is further configured to
receive (610) an indication of a location of a property of the work area by
determining a present position for the robotic work tool as the indication of locality, or
receiving the indication of locality from the user as
a street address for the property of the work area,
a property identifier for the property of the work area, or as
coordinates for the property of the work area, and wherein the controller is further configured to
retrieve (630) the representation of the indicated property of the work area by
matching (620) the indication of locality of the work area against land properties in a database for finding a matching property or area.

2. The robotic work tool system (200) according to claim 1, wherein more than one robotic work tool is selected.

3. The robotic work tool system (200) according to claim 1 or 2, wherein the controller (231) is further configured to provide a path planning for the selected robotic work tools.

4. The robotic work tool system (200) according to any preceding claim, wherein the database is a survey database, a map database, or an address lookup database.

5. The robotic work tool system (200) according to any preceding claim, wherein the representation comprises an image, and wherein the controller is further configured to analyse the representation based on image analysis of the image to determine boundaries and any specific features.

6. The robotic work tool system (200) according to any of claims 1 to 4, wherein the representation comprises map data, and wherein the controller is further configured to analyse the representation by extracting the needed data to define the boundaries and any specific features.

7. The robotic work tool system (200) according to any preceding claim, wherein the requirement indicates a quality of work, and wherein the controller (231) is further configured to generate the operating instructions by generating a queue of service requirements.

8. The robotic work tool system (200) according to any preceding claim, wherein the controller (231) is further configured to
determine that a service is to be halted;
determine at least one service requirement of at least one service to be continued;
determine at least one resource of the robotic work tool;
match the at least one service requirement to the at least one resource, and select the service to be continued based on the matching.

9. The robotic work tool system (200) according to any preceding claim, wherein user device (240) comprises a user interface (244) and the server (230) and wherein the server (230) receives the at least one user requirement from the user device (240) internally via the user interface (244).

10. The robotic work tool system (200) according to any preceding claim wherein the robotic work tool (100) is a gardening or horticultural robotic work tool suitable for outdoor work in uneven, often dirt or debris-filled environments.

11. The robotic work tool system (200) according to claim 10, wherein the robotic work tool (100) is a robotic lawnmower (100).

12. A method for use in a robotic work tool system (200) comprising a server (230), a user device (240) and one or more robotic work tools (100, 100-1, 100-2), the method comprising:
defining (510) an extent of a work area (205);
defining (520) features of the work area;
receiving at least one user requirement from the user device (240) , wherein the user requirements include user servicing requirements relating to a desired servicing degree, the user servicing requirements relate to one or more of an operational goal, a time for operation, and/or paths to be taken and/or prioritized;
defining (540) service requirements based on the extent of the work area, the features of the work area and the user requirement, the service requirements being related to the work area and are - at least in part - based on physical features of the work area, wherein the physical features relate to one or more of physical extent, geographical and/or environmental features within the work area, sub areas;
selecting (550) one or more of the one or more robotic work tools (100) based on capabilities of the robotic work tools (100) by matching the requirements to the capabilities of the robotic work tools;
generating (560) operating instructions for the selected robotic work tools (100); and
transmitting (570) the operating instructions to the selected robotic work tools (100), wherein the method is **characterized in that** the method further comprises defining (510) the extent of a work area (205) and defining (520) features of the work area by
receiving (610) an indication of a location of a property of the work area;
retrieving (630) a representation of the indicated property of the work area; and
analyzing the representation (640) for defining the work area (205) and features of the work area (205) and thereby
generating a map (125) of the work area (205); and
generating (560) the operating instructions for the selected robotic work tools (100) based on the map of the indicated property, wherein the method further comprises
receiving (610) an indication of a location of a property of the work area by
determining a present position and transmit this position as the indication of locality,
receiving the indication of locality the user as a street address for the property of the work area, a property identifier for the property of the work area, coordinates for the property of the work area, and wherein the method further comprises retrieving (630) the representation of the indicated property of the work area by
matching (620) the indication of locality of the work area against land properties in a database for finding a matching property or area.

## Patentansprüche

1. Roboterarbeitswerkzeugsystem (200), umfassend einen Server (230), eine Benutzervorrichtung (240) und ein oder mehrere Roboterarbeitswerkzeuge (100, 100-1, 100-2), der Server umfassend eine Steuereinrichtung (231), wobei die Steuereinrichtung (231) konfiguriert ist zum:
Definieren (510) eines Ausmaßes eines Arbeitsbereichs (205);
Definieren (520) von Merkmalen des Arbeitsbereichs;
Empfangen von mindestens einer Benutzeranforderung von der Benutzervorrichtung (240), wobei die Benutzeranforderungen Benutzerwartungsanforderungen einschließen, die sich auf einen gewünschten Wartungsgrad beziehen, die Benutzerwartungsanforderungen sich auf eines oder mehrere von einem Betriebsziel, einer Zeit für den Betrieb und/oder Pfade, die genommen und/oder priorisiert werden sollen, bezieht;
Definieren (540) von Serviceanforderungen basierend auf dem Ausmaß des Arbeitsbereichs, den Merkmalen des Arbeitsbereichs und der Benutzeranforderung, wobei die Serviceanforderungen sich auf den Arbeitsbereich beziehen und - mindestens teilweise - auf physischen Merkmalen des Arbeitsbereichs basieren, wobei sich die physischen Merkmale auf eines oder mehrere von physischem Ausmaß, geografischen Merkmalen und/oder Umgebungsmerkmalen innerhalb des Arbeitsbereichs, Unterbereichen beziehen;
Auswählen (550) eines oder mehrerer des einen oder der mehreren Roboterarbeitswerkzeuge (100) basierend auf Fähigkeiten der Roboterarbeitswerkzeuge (100) durch Abgleichen der Anforderungen mit den Fähigkeiten der Roboterarbeitswerkzeuge;
Generieren (560) von Betriebsanweisungen für die ausgewählten Roboterarbeitswerkzeuge (100); und zum
Übertragen (570) der Betriebsanweisungen an die ausgewählten Roboterwerkzeuge (100), wobei das Roboterwerkzeugsystem (200) **dadurch gekennzeichnet ist, dass** die Steuereinrichtung (231) ferner konfiguriert ist, um das Ausmaß eines Arbeitsbereichs (205) zu definieren (510) und Merkmale des Arbeitsbereichs zu definieren (520) durch
Empfangen (610) einer Angabe eines Standorts eines Grundstücks des Arbeitsbereichs;
Abrufen (630) einer Darstellung des angegebenen Grundstücks des Arbeitsbereichs; und
Analysieren der Darstellung (640) zum Definieren des Arbeitsbereichs (205) und Merkmalen des Arbeitsbereichs (205) und dadurch Generieren (650) einer Karte (125) des Arbeitsbereichs 205; und zum
Generieren (560) der Betriebsanweisungen für die ausgewählten Roboterarbeitswerkzeuge (100) basierend auf der Karte des angegebenen Grundstücks, wobei die Steuereinrichtung ferner konfiguriert ist zum
Empfangen (610) einer Angabe über einen Standort eines Grundstücks des Arbeitsbereichs durch
Bestimmen einer aktuellen Position für das Roboterarbeitswerkzeug als die Ortsangabe oder
Empfangen der Ortsangabe von dem Benutzer als
eine Straßenadresse für das Grundstück des Arbeitsbereichs,
eine Grundstückskennung für das Grundstück des Arbeitsbereichs oder als
Koordinaten für das Grundstück des Arbeitsbereichs, und wobei die Steuereinrichtung ferner konfiguriert ist zum
Abrufen (630) der Darstellung des angegebenen Grundstücks des Arbeitsbereichs durch
Abgleichen (620) der Ortsangabe des Arbeitsbereichs mit Grundbesitzgrundstücken in einer Datenbank zum Finden eines passenden Grundstücks oder Gebiets.

2. Roboterarbeitswerkzeugsystem (200) nach Anspruch 1, wobei mehr als ein Roboterarbeitswerkzeug ausgewählt ist.

3. Roboterarbeitswerkzeugsystem (200) nach Anspruch 1 oder 2, wobei die Steuereinrichtung (231) ferner konfiguriert ist, um eine Pfadplanung für die ausgewählten Roboterarbeitswerkzeuge bereitzustellen.

4. Roboterarbeitswerkzeugsystem (200) nach einem der vorstehenden Ansprüche, wobei die Datenbank eine Vermessungsdatenbank, eine Kartendatenbank oder eine Adresssuchdatenbank ist.

5. Roboterarbeitswerkzeugsystem (200) nach einem der vorstehenden Ansprüche, wobei die Darstellung ein Bild umfasst und wobei die Steuereinrichtung ferner konfiguriert ist, um die Darstellung basierend auf einer Bildanalyse des Bilds zu analysieren, um Grenzen und beliebige spezifische Merkmale zu bestimmen.

6. Roboterarbeitswerkzeugsystem (200) nach einem der Ansprüche 1 bis 4, wobei die Darstellung Kartendaten umfasst und wobei die Steuereinrichtung ferner konfiguriert ist, um die Darstellung durch Extrahieren der erforderlichen Daten, um die Grenzen und beliebige spezifische Merkmale zu definieren, zu analysieren.

7. Roboterarbeitswerkzeugsystem (200) nach einem der vorstehenden Ansprüche, wobei die Anforderung eine Arbeitsqualität angibt und wobei die Steuereinrichtung (231) ferner konfiguriert ist, um die Betriebsanweisungen durch Generieren einer Warteschlange von Serviceanforderungen zu generieren.

8. Roboterarbeitswerkzeugsystem (200) nach einem der vorstehenden Ansprüche, wobei die Steuereinrichtung (231) ferner konfiguriert ist zum
Bestimmen, dass ein Dienst angehalten werden soll;
Bestimmen mindestens einer Dienstanforderung für mindestens einen fortzuführenden Dienst;
Bestimmen mindestens einer Ressource des Roboterarbeitswerkzeugs;
Abgleichen der mindestens eine Dienstanforderung der mindestens einen Ressource und Auswählen des Dienstes, der basierend auf dem Abgleichen fortgeführt werden soll.

9. Roboterarbeitswerkzeugsystem (200) nach einem der vorstehenden Ansprüche, wobei die Benutzervorrichtung (240) eine Benutzerschnittstelle (244) und den Server (230) umfasst und wobei der Server (230) die mindestens eine Benutzeranforderung von der Benutzervorrichtung (240) über die Benutzerschnittstelle (244) intern empfängt.

10. Roboterarbeitswerkzeugsystem (200) nach einem der vorstehenden Ansprüche, wobei das Roboterarbeitswerkzeug (100) ein Garten- oder Gartenbauroboterarbeitswerkzeug ist, das für Arbeiten im Freien in unebenen, oft mit Schmutz oder Schutt gefüllten Umgebungen geeignet ist.

11. Roboterarbeitswerkzeugsystem (200) nach Anspruch 10, wobei das Roboterarbeitswerkzeug (100) ein Rasenmähroboter (100) ist.

12. Verfahren zur Verwendung in einem Roboterarbeitswerkzeugsystem (200), umfassend einen Server (230), eine Benutzervorrichtung (240) und ein oder mehrere Roboterarbeitswerkzeuge (100, 100-1, 100-2), das Verfahren umfassend:
Definieren (510) eines Ausmaßes eines Arbeitsbereichs (205);
Definieren (520) von Merkmalen des Arbeitsbereichs;
Empfangen mindestens einer Benutzeranforderung von der Benutzervorrichtung (240), wobei die Benutzeranforderungen Benutzerwartungsanforderungen einschließen, die sich auf einen gewünschten Wartungsgrad beziehen, die Benutzerwartungsanforderungen sich auf eines oder mehrere von einem Betriebsziel, einer Zeit für den Betrieb und/oder Pfade, die genommen und/oder priorisiert werden sollen, beziehen;
Definieren (540) von Dienstanforderungen basierend auf dem Ausmaß des Arbeitsbereichs, den Merkmalen des Arbeitsbereichs und den Benutzeranforderungen, wobei die Dienstanforderungen sich auf den Arbeitsbereich beziehen und - mindestens teilweise - auf physischen Merkmalen des Arbeitsbereichs basieren, wobei sich die physischen Merkmale auf eines oder mehrere von physischem Ausmaß, geografischen Merkmalen und/oder Umgebungsmerkmalen innerhalb des Arbeitsbereichs, Unterbereichen beziehen;
Auswählen (550) eines oder mehrerer des einen oder der mehreren Roboterarbeitswerkzeuge (100) basierend auf den Fähigkeiten der Roboterarbeitswerkzeuge (100) durch Abgleichen der Anforderungen mit den Fähigkeiten der Roboterarbeitswerkzeuge;
Generieren (560) von Betriebsanweisungen für die ausgewählten Roboterarbeitswerkzeuge (100); und
Übertragen (570) der Betriebsanweisungen an die ausgewählten Roboterwerkzeuge (100), wobei das Verfahren **dadurch gekennzeichnet, dass** das Verfahren ferner das Definieren (510) des Ausmaßes eines Arbeitsbereichs (205) und das Definieren (520) von Merkmalen des Arbeitsbereichs umfasst durch
Empfangen (610) einer Angabe eines Standorts eines Grundstücks des Arbeitsbereichs;
Abrufen (630) einer Darstellung des angegebenen Grundstücks des Arbeitsbereichs; und
Analysieren der Darstellung (640) zum Definieren des Arbeitsbereichs (205) und der Merkmale des Arbeitsbereichs (205) und dadurch
Generieren einer Karte (125) des Arbeitsbereichs (205); und
Generieren (560) der Betriebsanweisungen für die ausgewählten Roboterarbeitswerkzeuge (100) basierend auf der Karte des angegebenen Grundstücks, wobei das Verfahren ferner umfasst
Empfangen (610) einer Angabe über einen Standort eines Grundstücks des Arbeitsbereichs durch
Bestimmen einer aktuellen Position und Übertragen dieser Position als die Ortsangabe,
Empfangen der Ortsangabe des Benutzers als eine Straßenadresse für das Grundstück des Arbeitsbereichs, eine Grundstückskennung für das Grundstück des Arbeitsbereichs, Koordinaten für das Grundstück des Arbeitsbereichs, und wobei das Verfahren ferner das Abrufen (630) der Darstellung des angegebenen Grundstücks des Arbeitsbereichs umfasst durch
Abgleichen (620) der Ortsangabe des Arbeitsbereichs mit Grundbesitzgrundstücken in einer Datenbank zum Finden eines passenden Grundstücks oder Gebiets.

## Revendications

1. Système d'outil de travail robotisé (200) comprenant un serveur (230), un dispositif d'utilisateur (240) et un ou plusieurs outils de travail robotisés (100, 100-1, 100-2), le serveur comprenant un dispositif de commande (231), le dispositif de commande (231) étant configuré pour :
définir (510) l'étendue d'une zone de travail (205) ;
définir (520) les caractéristiques de l'espace de travail ;
recevoir au moins une exigence d'utilisateur à partir du dispositif d'utilisateur (240), dans lequel les exigences d'utilisateur comportent des exigences de service d'utilisateur relatives à un degré de service souhaité, les exigences de service d'utilisateur concernent un ou plusieurs objectifs opérationnels, à un temps de fonctionnement, et/ou à des voies à suivre et/ou à prioriser ;
définir (540) les exigences de service sur la base de l'étendue de la zone de travail, des caractéristiques de la zone de travail et des exigences d'utilisateur, les exigences de service étant relatives à la zone de travail et étant, au moins en partie, sur la base des caractéristiques physiques de la zone de travail, dans lequel les caractéristiques physiques concernent une ou plusieurs parmi une étendue physique, des caractéristiques géographiques et/ou environnementales au sein de la zone de travail, des sous-zones ;
sélectionner (550) un ou plusieurs du ou des outils de travail robotisés (100) sur la base des capacités des outils de travail robotisés (100) en faisant correspondre les exigences aux capacités des outils de travail robotisés ;
générer (560) des instructions de fonctionnement pour les outils de travail robotisés (100) sélectionnés ; et pour
transmettre (570) les instructions de fonctionnement aux outils de travail robotisés (100) sélectionnés, dans lequel le système d'outil de travail robotisé (200) est **caractérisé en ce que** le dispositif de commande (231) est en outre configuré pour définir (510) l'étendue d'une zone de travail (205) et définir (520) les caractéristiques de la zone de travail par
la réception (610) d'une indication de l'emplacement d'une propriété de la zone de travail ;
la récupération (630) d'une représentation de la propriété indiquée de la zone de travail ; et
l'analyse de la représentation (640) pour définir la zone de travail (205) et les caractéristiques de la zone de travail (205) et la génération (650) ainsi d'une carte (125) de la zone de travail 205 ; et pour
générer (560) les instructions de fonctionnement pour les outils de travail robotisés (100) sélectionnés sur la base de la carte de la propriété indiquée, dans lequel le dispositif de commande est en outre configuré pour
recevoir (610) une indication d'un emplacement d'une propriété de la zone de travail par
le fait de déterminer une position actuelle de l'outil de travail robotisé en tant qu'indication de localité, ou
la réception de l'indication de la localité à partir de l'utilisateur comme
une adresse de rue de la propriété de la zone de travail,
un identifiant de propriété pour la propriété de la zone de travail, ou comme
les coordonnées de la propriété de la zone de travail, et dans lequel le dispositif de commande est en outre configuré pour
récupérer (630) la représentation de la propriété indiquée de la zone de travail par
la correspondance (620) de l'indication de la localité de la zone de travail avec les propriétés foncières d'une base de données afin de trouver une propriété ou une zone correspondante.

2. Système d'outil de travail robotisé (200) selon la revendication 1, dans lequel plus d'un outil de travail robotisé est sélectionné.

3. Système d'outil de travail robotisé (200) selon la revendication 1 ou 2, dans lequel le dispositif de commande (231) est en outre configuré pour fournir une planification de trajectoire pour les outils de travail robotisés sélectionnés.

4. Système d'outil de travail robotisé (200) selon l'une quelconque revendication précédente, dans lequel la base de données est une base de données d'enquêtes, une base de données cartographiques ou une base de données de recherche d'adresses.

5. Système d'outil de travail robotisé (200) selon l'une quelconque revendication précédente, dans lequel la représentation comprend une image, et dans lequel le dispositif de commande est en outre configuré pour analyser la représentation sur la base d'une analyse d'image de l'image afin de déterminer les limites et quelconque caractéristique spécifique.

6. Système d'outil de travail robotisé (200) selon l'une quelconque des revendications 1 à 4, dans lequel la représentation comprend des données cartographiques, et dans lequel le dispositif de commande est en outre configuré pour analyser la représentation en extrayant les données nécessaires pour définir les limites et quelconque caractéristique spécifique.

7. Système d'outil de travail robotisé (200) selon l'une quelconque revendication précédente, dans lequel l'exigence indique une qualité de travail, et dans lequel le dispositif de commande (231) est en outre configuré pour générer les instructions de fonctionnement par la génération d'une file d'attente d'exigences de service.

8. Système d'outil de travail robotisé (200) selon l'une quelconque revendication précédente, dans lequel le dispositif de commande (231) est en outre configuré pour
déterminer qu'un service doit être arrêté ;
déterminer au moins une exigence de service d'au moins un service à poursuivre ;
déterminer au moins une ressource de l'outil de travail robotisé ;
faire correspondre l'au moins une exigence de service à l'au moins une ressource, et sélectionner le service à poursuivre sur la base de la correspondance.

9. Système d'outil de travail robotisé (200) selon l'une quelconque revendication précédente, dans lequel le dispositif d'utilisateur (240) comprend une interface d'utilisateur (244) et le serveur (230) et dans lequel le serveur (230) reçoit l'au moins une exigence d'utilisateur du dispositif d'utilisateur (240) en interne par l'intermédiaire de l'interface d'utilisateur (244).

10. Système d'outil de travail robotisé (200) selon l'une quelconque revendication précédente, dans lequel l'outil de travail robotisé (100) est un outil de travail robotisé de jardinage ou d'horticulture adapté au travail en extérieur dans des environnements irréguliers, souvent sales ou remplis de débris.

11. Système d'outil de travail robotisé (200) selon la revendication 10, dans lequel l'outil de travail robotisé (100) est une tondeuse à gazon robotisée (100).

12. Procédé pour utilisation dans un système d'outil de travail robotisé (200) comprenant un serveur (230), un dispositif d'utilisateur (240) et un ou plusieurs outils de travail robotisés (100, 100-1, 100-2), le procédé comprenant :
la définition (510) de l'étendue d'une zone de travail (205) ;
la définition (520) des caractéristiques de la zone de travail ;
la réception d'au moins une exigence d'utilisateur à partir du dispositif d'utilisateur (240), dans lequel les exigences d'utilisateur comportent des exigences de service d'utilisateur relatives à un degré de service souhaité, les exigences de service d'utilisateur concernent un ou plusieurs objectifs opérationnels, à un temps de fonctionnement, et/ou à des chemins à prendre et/ou à prioriser ;
la définition (540) des exigences de service sur la base de l'étendue de la zone de travail, des caractéristiques de la zone de travail et des exigences d'utilisateur, les exigences de service étant relatives à la zone de travail et étant, au moins en partie, sur la base des caractéristiques physiques de la zone de travail, dans lequel les caractéristiques physiques concernent une ou plusieurs parmi une étendue physique, des caractéristiques géographiques et/ou environnementales au sein de la zone de travail, des sous-zones ;
la sélection (550) d'un ou de plusieurs du ou des outils de travail robotisés (100) sur la base des capacités des outils de travail robotisés (100) en faisant correspondre les exigences aux capacités des outils de travail robotisés ;
la génération (560) des instructions de fonctionnement pour les outils de travail robotisés (100) sélectionnés ; et
la transmission (570) des instructions de fonctionnement aux outils de travail robotisés (100) sélectionnés, dans lequel le procédé est **caractérisée en ce que** le procédé comprend en outre la définition (510) de l'étendue d'une zone de travail (205) et la définition (520) des caractéristiques de la zone de travail par
la réception (610) d'une indication de l'emplacement d'une propriété de la zone de travail ;
la récupération (630) d'une représentation de la propriété indiquée de la zone de travail ; et
l'analyse de la représentation (640) pour définir la zone de travail (205) et les caractéristiques de la zone de travail (205) et ainsi
la génération d'une carte (125) de la zone de travail (205) ; et
la génération (560) des instructions de fonctionnement pour les outils de travail robotisés (100) sélectionnés sur la base de la carte de la propriété indiquée, dans lequel le procédé comprend en outre
la réception (610) d'une indication de l'emplacement d'une propriété de la zone de travail par
la détermination d'une position actuelle et la transmission de cette position en tant qu'indication de la localité,
la réception de l'indication de la localité de l'utilisateur sous la forme d'une adresse de rue pour la propriété de la zone de travail, un identifiant de propriété pour la propriété de la zone de travail, des coordonnées pour la propriété de la zone de travail, et dans lequel le procédé comprend en outre l'extraction (630) de la représentation de la propriété indiquée de la zone de travail par
la correspondance (620) de l'indication de la localité de la zone de travail avec les propriétés foncières d'une base de données afin de trouver une propriété ou une zone correspondante.
